# EUROPEAN PATENT APPLICATION

(11) **EP 3 508 931 A1**
(43) Date of publication of application: **10.07.2019**
(21) Application number: 18188580.7
(22) Date of filing: 10.08.2018
(51) Int. Cl.: G05B 19/401, B22F 3/105

(54) **DEVICE FOR CALIBRATING A HOLDER FOR TRANSFERRING SEMIFINISHED PRODUCTS MADE BY LASER SINTERING**

(30) Priority: 05.01.2018 PL 42420818
(71) Applicant: EMT-Systems Sp.z o.o., 44-100 Gilwice (PL)
(72) Inventor: Czop, Piotr, 44-100 Gliwice (PL); S oniewski, Jakub, 44-100 Gliwice (PL); Wszo ek, Grzegorz, 44-100 Gliwice (PL)
(74) Representative: Lampart, Jerzy

(57) **Abstract**

The device for calibrating a holder for transferring semifinished products made by laser sintering is fabricated by direct laser sintering of metal powder, it has at least one element of regular shape and strictly defined measurable dimensions for finish machining (1) and has a plurality of supporting arms (2) connected with shaped holders (3) and with a reference holder (3a) for positioning the supporting arms (2) for transferring semifinished products made by laser sintering, which have an opening that co-acts with the positioning means of the holder. The device has a plurality of connecting arms (6) that connect the supporting arms (2) with either the elements for finish machining (1) or with other supporting arms (2). Each element for finish machining (1) has at least one horizontal wall of set thickness and at least one pair of transverse walls of set thickness arranged vertically or slightly diverging from the vertical, wherein the first transverse wall (8a) is perpendicular to the second transverse wall, and wherein perpendicularity is determined in the horizontal plane. The elements for finish machining (1) are oriented in such a way that the axes of the zero coordinate system of the milling machine are parallel, respectively, to the long axis, transverse axis and vertical axis of each element for finish machining (1).

## Description

The methods commonly used in dental technology for fabricating dental products made of metal materials are casting by the lost wax technique and milling using CAM/CNC technology. The development of the latter method led to the introduction of a new method that is technologically based on laser sintering of metal powders. This method has many advantages, among which material savings is probably the principal one. The latest solution is a fabrication method which is a combination of the method of fabrication using metal powder laser sintering and of milling on CNC milling machines of blanks made by the method of laser sintering. To make such combination possible, it is necessary to explicitly fix the blank made by the laser sintering method on a CNC milling machine and to determine the machining zero point so as to attain the desired tolerance of the position of the parts fabricated by milling in relation to the blank fabricated by metal powder laser sintering.

In industrial applications, methods have been used for a long time, which allow to determine machining zero points with the use of workpiece touch probes. In addition, in industrial applications, there are machines of hybrid design, having a sintering and milling head in one, thus using a single machining zero point for both processes. An example of such a machine is a device disclosed in utility model CN206343898.

Milling machines equipped with workpiece touch probes and hybrid machines are not widely used in dental technology, primarily for economic reasons. In practice, simple milling machines are used, usually 5-axis machines, with their machining zero point determined arbitrarily by calibration. In addition, hybrid machines that employ both laser sintering and milling are not used. Fabrication is effected in two steps using a milling machine and a laser sintering machine. Therefore there is a need for additional means that make it possible to unequivocally position the blank such that the position of the to be milled relative to the arbitrarily determined machining zero point coincides with their expected position resulting from the machining program of the CNC milling machine. An example of such means is the holder disclosed in patent application EP3095538. The solution presented therein uses a circular body with positioning means, preferably of conical shape, to which appropriately shaped arms for supporting the semifinished product are affixed. Unambiguous arrangement of the positioning means is attained by milling the holder in an arbitrarily designated coordinate system. In the market there is a commercial solution called Make&Mill, supplied by the Italian company CIMsystem (http://www.cimsystem.com/areafile/documentazione/SUM3D-(http://www.cimsystem.com/areafile/documentazione/SUM3D-illBox_2017_ENG_LR.pdf- retrieved 2.01.2018). This solution differs slightly from that of EP3095538. Instead of the circumferentially arranged conical positioning means, the holder has 4 positioning pins, the position of which is determined by finish machining in user's machine, and the holder is provided with additional openings used exclusively for mounting.

The disadvantage of the above solutions is their susceptibility to minimal changes in the position of the arbitrarily determined machining zero point and the inability to remove the holder without losing the unambiguous geometrical reference of the reference elements against the machining zero point. Elimination of the changes or reinstating the unambiguous geometrical reference of these elements requires repeating the fabrication of the entire holder, which involves additional costs and inconvenience to the user.

In view of the above, the authors of the present invention propose a calibration device that enables determining the geometrical deviation of the position of the holder disclosed in the patent application EP3095538 with respect to the arbitrarily determined machining zero system.

The device for calibrating a holder for transferring semifinished products made by laser sintering is fabricated by direct laser sintering of metal powder, the device has at least element of regular shape and strictly defined measurable dimensions for finish and has a plurality of supporting arms connected with shaped holders for positioning the supporting arms in relation to the holder for transferring semifinished products made by laser sintering, which have an opening that co-acts with positioning means that is part of the holder for transferring semifinished products made by laser sintering. The device has plurality of arms that connect the supporting arms with either the elements for finish machining or with other supporting arms. Each element for finish machining has at least one horizontal wall of set thickness and at least a pair of transverse walls of set arranged vertically or slightly diverging from the vertical, wherein the first transverse wall perpendicular to the second transverse wall and wherein perpendicularity is determined the horizontal plane. The elements for finish machining are oriented in such a way that axes of the zero coordinate system of the milling machine are parallel, respectively, to long axis, transverse axis and vertical axis of each element for finish machining. The device for calibrating a holder for transferring semifinished products made by laser sintering has at least one reference holder provided on the supporting arm, said holder having at least 2 openings, at least one of which is connected with the positioning means of the holder for transferring semifinished products made by laser sintering, and the remaining openings are designed for attaching the reference holder with fastening bolts.

Additionally, the device also allows to determine the value of deviations of the position of the arbitrarily determined machining zero point, which during the operation of the machine can be slightly shifted due to cutting forces and vibrations acting on the mechanical system of the milling machine. The device for calibrating enables measurement of elements of set dimensions. The measurement results are used for calculating the deviations, the values of which are subsequently entered into the CAM software dedicated for the holder. The measurement does not require fabrication of a new holder on the user's machine, and thereby the inconveniences associated with such fabrication can be avoided.

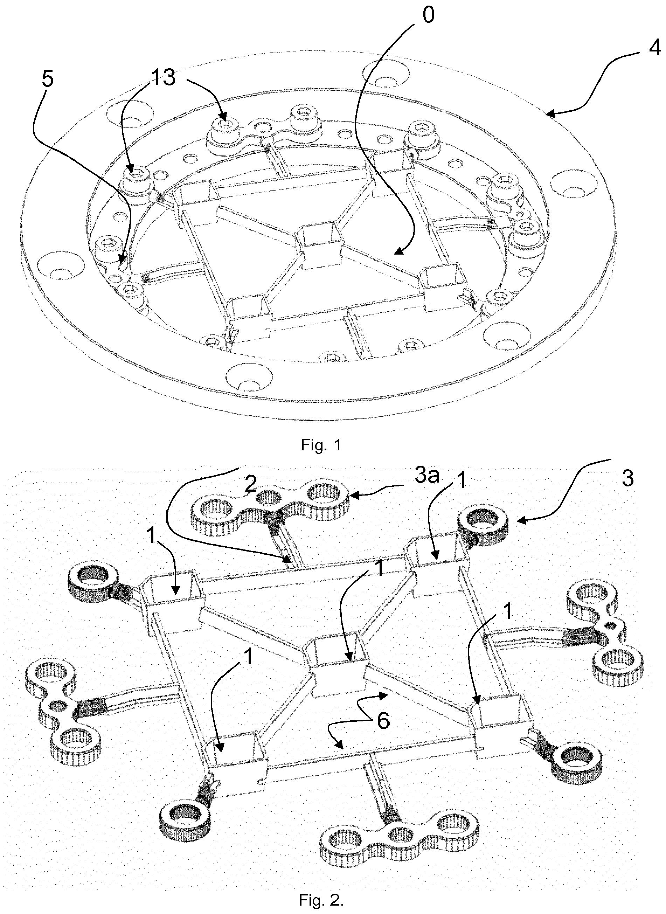

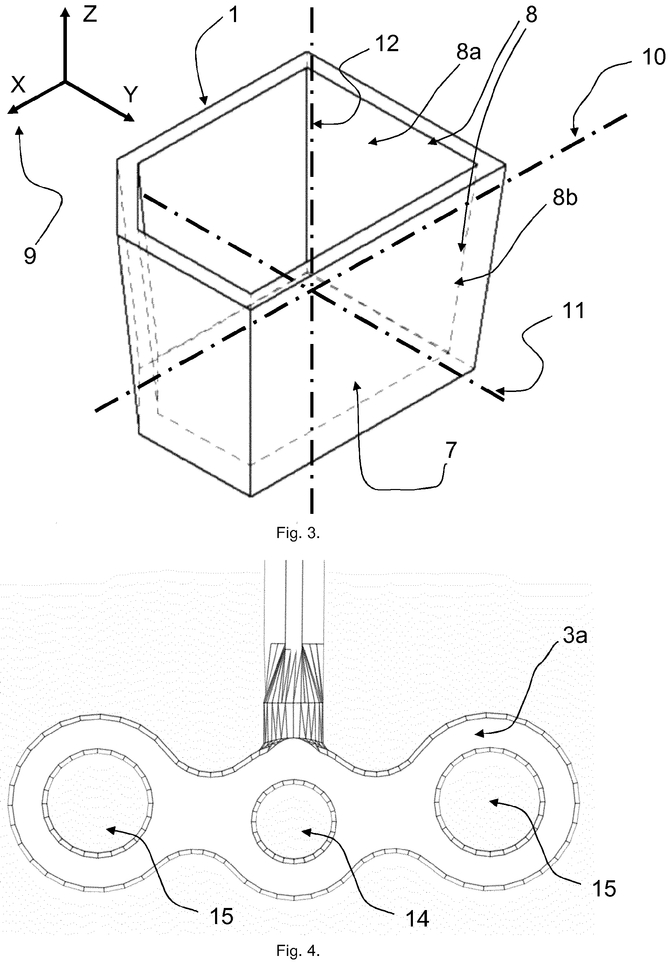

The subject of the invention is illustrated in an example embodiment shown in the figures, where Fig. 1 shows a view of the device mounted in a holder. Fig. 2 is a view of the device without the holder. Fig. 3 shows an example of an element for finish machining. Fig. 4. shows an example of a shaped holder.

The device for calibrating a holder for transferring semifinished products made by laser sintering is fabricated by laser sintering of metal powder in a manner analogous with the fabrication of blanks for finish machining by means of a CNC milling machine. The has at least one element for finish machining 1, a plurality of supporting arms 2, a of shaped holders 3, a plurality of connecting arms 6. In addition, the device can have or more reference holders 3a of special structure. The shaped holders 3 or reference holders 3a are connected with supporting arms 2 in such manner that each supporting 2 has at its end at least one shaped holder 3 or a reference holder 3a. The shaped 3 and reference holders 3a are used for attaching the supporting arms 2, and consequently the entire semifinished product, to the holder 4 for transferring products made by laser sintering. The shaped holders 3 are connected with holder 4 for transferring semifinished products made by laser sintering by means of positioning 5 and are attached by means of bolts 13 or, if reference holders 3a are used, holders 3 attached by means of bolts 13 without the positioning means 5, and the reference 3a are connected with holder 4 for transferring semifinished products made by laser sintering by means of positioning means 5 and bolts 13. The first option is used in particular when the solution disclosed in the patent application EP3095538 is applied, while the second option is used in particular when the solution known from the Make&Mill conception is applied. The shaped holder 3 has an opening for receiving bolt or positioning means 5 of conical shape. The reference holder 3a has at least one reference opening 14 that co-acts with positioning means 5 in the form of a pin, and has least one mounting hole 15 for attaching with the use of bolt 13. The connecting arms 6 connect the supporting arms 2 with the elements for finish machining 1 or connect the supporting arms 2 with other supporting arms 2. Each element for finish machining 1 is regular shape of strictly defined measurable dimensions. The user knows the nominal dimensions which serve as a reference for comparison with measurement results. Moreover, each element for finish machining 1 has at least one horizontal wall 7 of set thickness and at least one pair of transverse walls 8 of set thickness arranged vertically slightly diverging from the vertical. The user knows the set thicknesses of the horizontal wall 7 and of the transverse wall 8 which serve as a reference for comparison with measurement results. The first transverse wall 8a is perpendicular to the second transverse wall 8b wherein the perpendicularity is determined in the horizontal plane. In addition, the elements for finish machining 1 are oriented in the device in such a way the axes of the zero coordinate system of the milling machine 9 are parallel, respectively, to the long axis 10, transverse axis 11 and vertical axis 12. This arrangement of for finish machining 1 enables correlating the thickness measurements of subsequent walls with the dislocations along the corresponding axes. Measurement of the second transverse wall 8a perpendicular to the long axis 10 enables the determination of the dislocation along the X axis, measurement of the second transverse wall 8b to the transverse axis 11 enables the determination of the dislocation along the Y axis, measurement of the horizontal wall 7 perpendicular to the vertical axis 12 enables the determination of the dislocation along the Z axis.

## Claims

1. A device for calibrating a holder for transferring semifinished products made by laser sintering is fabricated by direct laser sintering of metal powder, the device having at least one element of regular shape and strictly defined measurable dimensions for finish machining (1) and has a plurality of supporting arms (2) connected with shaped holders (3) for positioning the supporting arms (2) in relation to the holder (4) for transferring semifinished products made by laser sintering, which have an opening that co-acts with positioning means (5) that is part of the holder (4) for transferring semifinished products made by laser sintering; and having a plurality of connecting arms (6) that connect the supporting arms (2) with either the elements for finish machining (1) or with other supporting arms (2), **characterized in that** each element for finish machining (1) has at least one horizontal wall (7) of set thickness and at least one pair of transverse walls (8) of set thickness arranged vertically or slightly diverging from the vertical, wherein the first transverse wall (8a) is perpendicular to the second transverse wall (8b) and wherein perpendicularity is determined in the horizontal plane; and **in that** the elements for finish machining (1) are oriented in such a way that the axes of the zero coordinate system of the milling machine (9) are parallel, respectively, to the long axis (10), transverse axis (11) and vertical axis (12) of each element for finish machining (1).

2. A device for calibrating a holder for transferring semifinished products made by laser sintering according to claim 1, **characterized in that** the device has at least one reference holder (3a) provided on the supporting arm (2), said reference holder having at least 2 openings, at least one of which (14) is connected with the positioning means (5) of the holder (4) for transferring semifinished products made by laser sintering, whereas the remaining openings (15) are designed for attaching the reference holder (3a) with fastening bolts (13).
